# DEMANDE DE BREVET EUROPEEN

(11) **EP 1 803 868 A1**
(43) Date de publication de la demande: **04.07.2007**
(21) Numéro de dépôt: 06292028.5
(22) Date de dépôt: 22.12.2006
(51) Int. Cl.: E04F 15/02, E04F 13/14, B32B 37/12, B32B 21/02, B32B 7/14, B05D 7/06

(54) **Produit de revêtement de sol, mur ou autre surface de bâtiment, ainsi que procédé et dispositif de fabrication associés**

(30) Priorité: 30.12.2005 FR 0513496
(71) Demandeur: Manelli, Franco, 57000 Metz (FR)
(72) Inventeur: Manelli, Franco, 57000 Metz (FR)
(74) Mandataire: Kaspar, Jean-Georges

(57) **Abrégé**

Un procédé de fabrication de produits de revêtement de sols, murs ou autres surfaces de bâtiment, comporte les étapes suivantes :
a) déposer (15) une enduction sur toute la surface d'un support de base pour imperméabiliser cette surface ;
b) déposer (16) uniquement en partie centrale (5) dudit support de base des lignes ou des points d'agent adhésif, avant d'appliquer sur le support de base un produit sensiblement plan et présentant des pores ou une concavité en partie centrale.
Un dispositif de fabrication de produits de revêtement de sols, murs ou autres surfaces de bâtiment, comporte des moyens pour réaliser les étapes du procédé de fabrication.

## Description

L'invention est relative à un procédé de fabrication de produits de revêtement de sols, murs ou autres surfaces de bâtiment.

L'invention est également relative à un dispositif de fabrication de produits de revêtement de sols, murs ou autres surfaces de bâtiment.

Le document WO 04/097 141 décrit des procédés et des plaques modulaires de revêtement.

Ces plaques modulaires de revêtement comprennent une plaque inférieure de substrat, une couche intermédiaire adhésive et une plaque décorative du genre pierre naturelle, marbre, granit, ardoise, verre, ou céramique. Les procédés de fabrication et d'utilisation selon le document WO 04/097 141 prévoit l'application d'une composition adhésive pour former une couche d'adhésion intermédiaire entre deux plaques sensiblement planes, dont l'une est un substrat et l'autre une plaque présentant une dureté Mohs supérieure à 3 et une épaisseur comprise entre 2 et 12 mm.

Les produits et les procédés selon le document WO 04/097 141 peuvent être utilisés pour fabriquer à partir de produits d'épaisseur notable des plaques composites utilisables en pose à sec.

Cependant, dans le cas où le substrat et la plaque décorative présentent des irrégularités ou des concavités dues par exemple à la cuisson des produits en céramique ou en grès émaillé, l'enseignement du document WO 04/097 141 ne permet pas d'obtenir à un résultat satisfaisant, à moins d'augmenter de manière importante l'épaisseur des composants, leur poids et leur rigidité.

Un but de l'invention est de remédier aux inconvénients de la technique connue du document WO 04/097 141, en proposant un nouveau procédé et un nouveau dispositif pour fabriquer des produits de revêtements de sols, murs, ou autres surfaces de bâtiment incorporant en particulier des produits obtenus par cuisson en céramique ou en grès émaillé.

L'invention a pour objet un procédé de fabrication de produit de revêtement de sol, mur ou autre surface de bâtiment, comportant les étapes suivantes :
- déposer une enduction sur toute la surface d'un support de base pour imperméabiliser cette surface,
- déposer uniquement en partie centrale dudit support de base des lignes ou des points d'agent adhésif, avant d'appliquer sur le support de base un produit sensiblement plan et présentant des pores ou une concavité en partie centrale pour fabriquer le produit de revêtement de sol, mur ou autre surface de bâtiment.

Selon d'autres caractéristiques alternatives de l'invention :
- le procédé de fabrication de produits de revêtement de sols, murs ou autres surfaces de bâtiment, comporte des étapes initiales de climatisation du support de base, de nettoyage du support de base et de convoyage du support de base.
- le procédé de fabrication de produits de revêtement de sols, murs ou autres surfaces de bâtiment, comporte des étapes initiales de convoyage du produit sensiblement plan, de dépoussiérage du produit sensiblement plan et de réchauffage du produit sensiblement plan.
- le procédé de fabrication de produits de revêtement de sols, murs ou autres surfaces de bâtiment, comporte une étape de mise en pression après assemblage (300) du produit de revêtement, à une pression de l'ordre de 100 bars.
- le procédé de fabrication de produits de revêtement de sols, murs ou autres surfaces de bâtiment, comporte une étape de calandrage du produit de revêtement.

L'invention a également pour objet un dispositif de fabrication de produit de revêtement de sol, mur ou autre surface de bâtiment, comportant :
- des moyens pour déposer une enduction sur toute la surface d'un support de base pour imperméabiliser cette surface.
- des moyens pour déposer uniquement en partie centrale dudit support de base des lignes ou des points d'agent adhésif, avant d'appliquer sur le support de base un produit sensiblement plan et présentant des pores ou une concavité en partie centrale pour fabriquer le produit de revêtement de sol, mur ou autre surface de bâtiment.

Selon d'autres caractéristiques alternatives de l'invention :
- le dispositif de fabrication de produits de revêtement de sols, murs ou autres surfaces de bâtiment, comporte des moyens de climatisation du support de base, des moyens de nettoyage du support de base et des moyens de convoyage du support de base.
- le dispositif de fabrication de produits de revêtement de sols, murs ou autres surfaces de bâtiment, comporte des moyens de convoyage du produit sensiblement plan, des moyens de dépoussiérage du produit sensiblement plan et des moyens de réchauffage du produit sensiblement plan.
- le dispositif de fabrication de produits de revêtement de sols, murs ou autres surfaces de bâtiment, comporte des moyens de mise en pression à une pression de l'ordre de 100 bars et des moyens d'assemblage du produit de revêtement.
- le dispositif de fabrication de produits de revêtement de sols, murs ou autres surfaces de bâtiment, comporte des moyens de calandrage du produit de revêtement.

L'invention a également pour objet un produit de revêtement obtenu pour mise en oeuvre d'un procédé de fabrication selon l'invention.

L'invention sera mieux comprise grâce à la description qui va suivre donnée à titre d'exemple non limitatif en référence aux dessins annexés dans lesquels :
La figure 1 représente schématiquement un organigramme de procédé selon l'invention.
La figure 2 représente schématiquement une vue partielle en perspective d'un dispositif selon l'invention.
La figure 3 représente schématiquement une vue de dessus d'un dispositif selon l'invention.
La figure 4 représente schématiquement une vue en coupe illustrant une utilisation d'un panneau de revêtement selon l'invention.

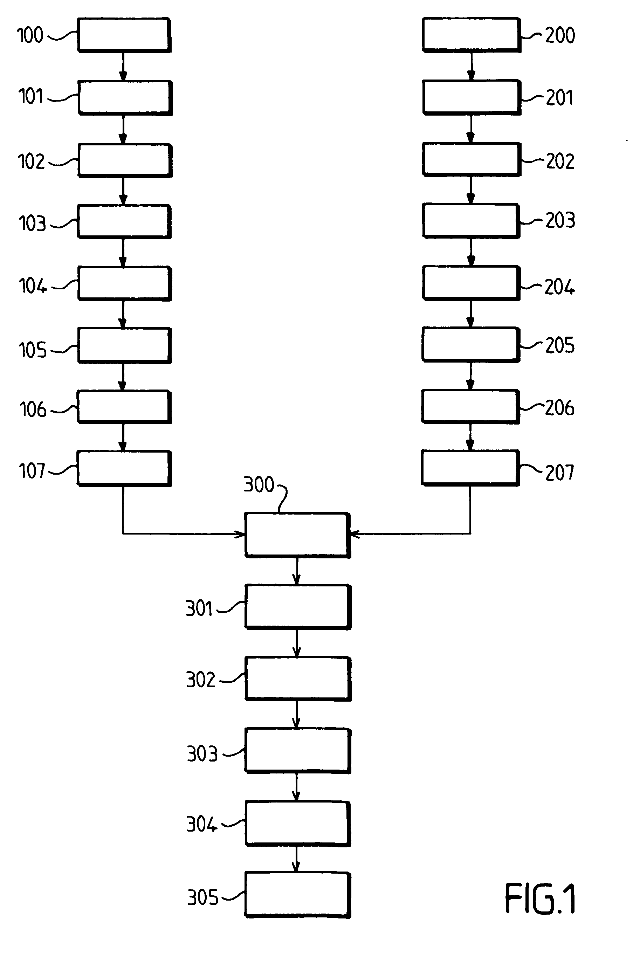

En référence à la figure 1, un procédé de fabrication de produits de revêtement selon l'invention comporte une étape 100 de préparation d'une quantité prédéterminée de panneaux de support, par exemple de cinq cents panneaux mélaminés de fibres de bois pressées moyenne densité.

Les panneaux de support sont chargés dans un conteneur vertical de magasinage intégrant un dispositif d'extraction unitaire et continu par files.

Après chargement, les conteneurs verticaux formant un magasin de panneaux de supports sont placés à une étape 101 dans une enceinte saturée d'humidité à une température de 40°C en vue d'imprégner superficiellement chaque panneau de support d'une quantité d'eau destinée à favoriser la réticulation d'un produit de collage telle qu'une résine polyuréthane.

Les magasins formant des conteneurs verticaux sont ensuite transférés à une étape 102 dans une enceinte de nettoyage par jet d'eau en vue de préparer les surfaces réceptrices d'agent de collage.

Les supports sont ensuite contrôlés à une étape 103, pour vérifier les valeurs dimensionnelles, la géométrie et la planimétrie de chaque panneau de support, ainsi que son intégrité. Les panneaux de supports ne satisfaisant pas aux spécifications désirées sont écartées automatiquement et retirées du procédé selon l'invention.

Après contrôle des défauts, les panneaux de supports retenus comme conformes aux spécifications sont transférés sur un convoyeur à une étape 104, par exemple sur deux files parallèles.

Les panneaux en circulation sur le convoyeur pénètrent à une étape 105 dans une première machine d'enduction au rouleau. L'enduction au rouleau est réalisée sur toute la surface du panneau de support, de manière à imperméabiliser totalement cette surface et à faciliter la réticulation de l'agent de collage, par exemple une résine polyuréthane.

Les panneaux de support enduits sur toute leur surface à l'étape 105 sont ensuite transférés à l'étape 106 dans un poste d'application d'agent de collage.

L'application de l'agent de collage à l'étape 106 s'effectue grâce à une pluralité de pistolets ou de moyens permettant une extrusion de filets d'agent de collage, en quantité et en poids programmable, mais uniquement en partie centrale des agents de support.

Le fait de déposer les filets de colle uniquement en partie centrale des panneaux de support permet de remplir des petites cavités existant entre le support et le carreau en raison de la légère concavité de la surface d'appui des carreaux ou produits de cuisson en matériau céramique, en grès émaillé, ou matériau analogue.

Egalement, le fait de disposer un agent de collage en partie centrale permet d'augmenter la résistance à la flexion et la résistance aux sollicitations mécaniques du produit de revêtement après sa fabrication.

Les panneaux de support imperméabilisés en surface et munis en partie centrale de plusieurs filets d'agent de collage sont ensuite transférés à une étape 107 dans un poste de positionnement avant assemblage.

Parallèlement aux opérations effectuées sur les panneaux de support, une opération de transfert de carreaux en produit céramique cuit est réalisé à une étape 200 pour transférer des palettes de carreaux, par exemple des palettes contenant chacune quatre-vingts emballages composés chacun de quinze carreaux vers une machine de dépalettisation et de désemballage.

La machine de dépalettisation et de désemballage extrait chaque paquet à une étape 201, en alimentant un convoyeur.

Le convoyeur alimenté en flux continu achemine les carreaux vers les opérations suivantes pendant une étape 202 en convoyage à flux continu sur un tapis convoyeur, par exemple à raison de cent pièces par minute.

A une étape 203, les carreaux acheminés vers les opérations suivantes passent dans un poste de contrôle de défaut des carreaux permettant d'éliminer les carreaux ne répondant pas aux spécifications désirées.

Après contrôle des carreaux à l'étape 203 et extraction des carreaux présentant des défauts éventuels, les carreaux retenus sont acheminés vers un poste de dépoussiérage de la surface du carreau destinée à être encollée à une étape 204.

Le dépoussiérage réalisé à l'étape 204 permet de libérer tous les pores ouverts des carreaux céramiques, en vue de faciliter une bonne pénétration de l'agent de collage.

Après le dépoussiérage réalisé à l'étape 204, les carreaux sont acheminés vers un poste de réchauffement à une étape 205. Le réchauffement des carreaux réalisé à l'étape 205 s'effectue à une température de 40°C, afin de retarder le début de réticulation de l'agent de collage au moment du contact avec le carreau, en maintenant ainsi une viscosité basse permettant le mouillage et la pénétration complète de la surface à traiter par l'agent de collage, en autorisant également un traitement ultérieur de calandrage.

Après préparation des carreaux, les carreaux sont acheminés à une machine de préparation de positionnement intermédiaire à une étape 206. Le positionnement intermédiaire réalisé à cette étape 206 permet d'envoyer des paires de carreaux dans six canaux individuels correspondants à un changement orthogonal de direction de la circulation des produits.

Après préparation du positionnement intermédiaire, on effectue le changement de direction pour positionner effectivement les carreaux à une étape 207 dans un poste d'attente permettant la saisie automatique en vue de l'assemblage.

Les supports positionnés à l'étape 107 et les carreaux positionnés à l'étape 207 dans leur poste d'attente sont ensuite assemblés à une étape 300, par exemple à l'aide d'un robot d'assemblage.

Après avoir appliqué les carreaux sur les supports à cette étape 300, le robot d'assemblage appuie avec l'aide de vérins pneumatiques sur les carreaux pour comprimer l'assemblage avec une pression de 100 bars.

Cette pression d'application est effectuée à l'étape 301 et permet de préparer les produits de revêtements assemblés à passer dans un poste de calandrage ou de calibrage d'épaisseur à une étape 302, pour parachever la compression du carreau contre le support, tout en garantissant une épaisseur reproductible du produit fini. Dans cette étape 302 de calandrage, la résine encore à l'état pâteux remplit entièrement l'interstice entre les deux composants du produit de revêtement selon l'invention.

Au sortir de l'étape 302 de calandrage, les produits de revêtements sont transférés vers une étape 303 de contrôle de produits finis, puis subissent une étape 304 de confection de paquets, avant d'être transférés à la palettisation à l'étape 305. Au sortir de l'étape 305, les palettes de produits de revêtements selon l'invention sont expédiées ou stockées automatiquement en attendant leur expédition.

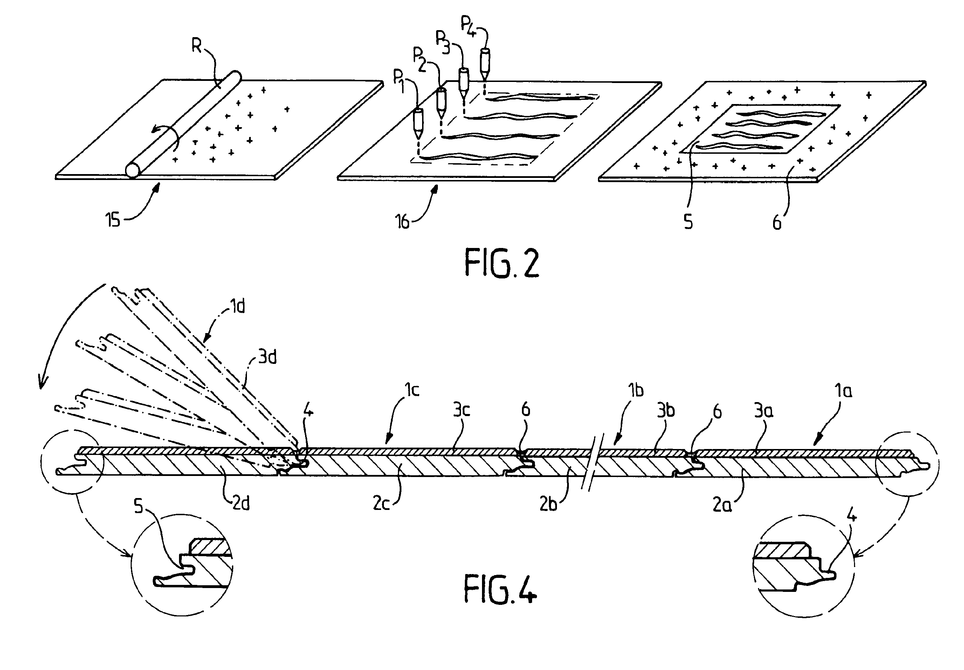

Sur la figure 2, une installation ou dispositif de fabrication de produits de revêtements selon l'invention comporte en particulier des moyens 15 d'enduction surfacique, par exemple à l'aide d'un rouleau sur une surface de panneau de support mélaminé en fibres de bois pressées de moyenne densité.

Des machines d'enduction au rouleau sont disponibles dans le commerce, par exemple pour revêtir des surfaces par de la résine polyuréthane à une température comprise entre 100°C et 140°C et selon un grammage de l'ordre de 150 grammes par mètre carré.

Le dispositif selon l'invention comporte également des moyens 16 comportant par exemple plusieurs pistolets P₁, P₂, P₃, P₄ permettant le dépôt de filets de colle seulement en partie centrale du panneau de support enduit précédemment au rouleau.

Après traitement par les moyens 15 d'enduction et les moyens 16 de dépose en partie centrale des agents de collage, chaque panneau de support préparé présente une partie centrale 5 renforcée en agent de collage et une partie périphérique 6 enduite plus légèrement, de manière à compenser la concavité résultant de la cuisson du carreau destiné à être appliqué sur le panneau de support.

Ainsi, grâce à l'invention, les défauts éventuels de qualité pouvant résulter de l'application du procédé selon le document WO 04/097 141 sont évités, de sorte qu'il est effectivement possible de préparer des produits de revêtements selon l'invention en utilisant des carreaux obtenus par cuisson.

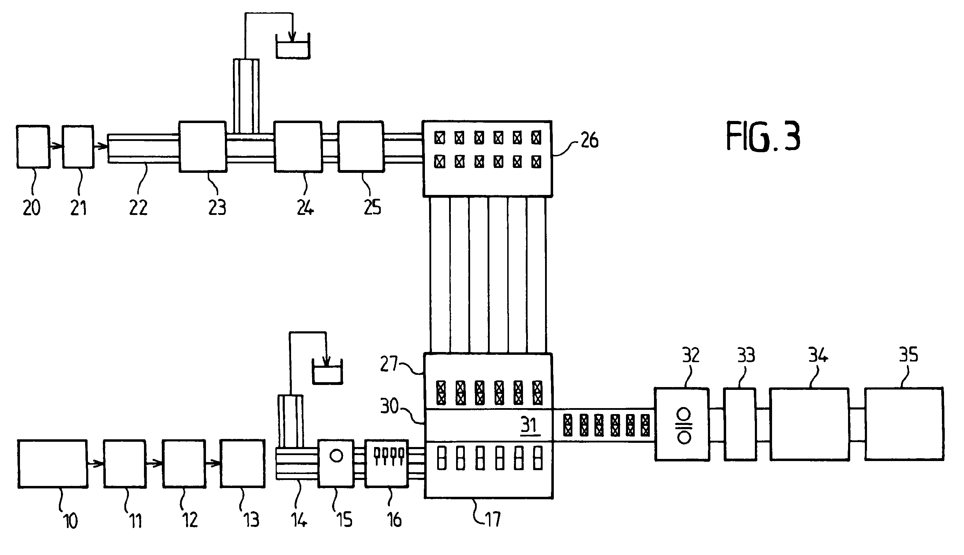

Sur la figure 3, une installation ou dispositif selon l'invention comporte les postes 15 et 16 décrits en référence à la figure 2.

Le dispositif ou installation de cuisson selon l'invention comporte, vu de dessus, une conformation générale en Y, comportant une branche de préparation des supports mélaminés et une branche de préparation des produits en céramique.

Les deux branches de l'installation en Y se rejoignent pour réaliser l'assemblage du produit de revêtement selon l'invention.

La branche de préparation de produits mélaminés comporte un poste 10 de chargement de panneaux de support dans des conteneurs verticaux formant magasin vertical, un poste 11 de climatisation à une température voisine de 40°C et à cent pour cent d'humidité, un poste 12 comportant une machine hydronettoyante de la surface destinée à recevoir l'agent de collage, un poste 13 de contrôle des défauts, un convoyeur 14 de transfert des produits retenus après contrôle, un poste 15 d'enduction au rouleau d'agent de collage, pour enduire au rouleau toute la surface des panneaux de support mélaminés en fibre en moyenne densité, un poste 16 de dépôt de filet d'agent de collage uniquement en partie centrale des panneaux de support mélaminés, et un poste 17 de positionnement avant assemblage des panneaux de support enduits et pourvus de filets de renforcement d'agent de collage en partie centrale.

La branche de préparation des carreaux en céramique ou en produits cuits comporte un poste 20 de transfert, un poste 21 de dépalettisation et de désemballage, un convoyeur 22 à bande, un poste 23 de contrôle de défauts, un poste 24 de dépoussiérage, un poste 25 de réchauffement à 40°C, un poste 26 de préparation du positionnement intermédiaire avant changement orthogonal du sens de circulation des carreaux, et un poste 27 d'attente et de positionnement avant assemblage.

Les deux branches se rejoignent au poste 30 d'assemblage qui assume également la fonction de poste 31 de mise en pression des carreaux sur leur support à une pression voisine de 100 bars.

Les paires de produits assemblés et préalablement mis en pression sont ensuite acheminées vers un poste 32 du calandrage, un poste 33 de contrôle de défauts ou contrôle qualité, un poste 34 de confection de paquets et un poste 35 de palettisation.

Sur la figure 4, un ensemble de produits de revêtement selon l'invention est représenté.

Chaque produit de revêtement selon l'invention 1a, 1b, 1c, 1d comporte une partie inférieure formant support 2a, 2b, 2c, 2d et une partie supérieure 3a, 3b, 3c, 3d constituée par un produit céramique obtenu par cuisson.

Chaque partie inférieure 2a, 2b, 2c, 2d est assemblée à la partie supérieure 3a, 3b, 3c, 3d correspondante grâce au procédé selon l'invention décrit en référence de la figure 1, ou en utilisant une installation ou un dispositif décrit en référence aux figures 2 et 3.

Le produit de revêtement 1d est assemblé au produit de revêtement 1c par emboîtement à l'aide d'une extrémité 4 formant tenon rotatif apte à s'insérer dans une mortaise 5 du produit de revêtement 1c.

Le produit de revêtement 1c est assemblé au produit de revêtement 1b par coopération d'un tenon 4 et d'une mortaise 5, les surfaces supérieures des supports 2c et 2b étant imperméabilisées par enduction au rouleau d'un produit imperméable formant simultanément agent de collage.

Les produits de revêtements 1b et 1a sont assemblés entre eux par coopération d'un tenon 4 et d'une mortaise 5. Un joint d'étanchéité 6 peut être prévu pour obturer l'intervalle entre les produits céramiques 3a et 3b et pour former un joint d'étanchéité protégeant à la fois la surface supérieure des supports 2a, 2b et leur ligne d'assemblage.

L'invention décrite en référence a des modes de réalisation particuliers n'y est nullement limitée, mais couvre au contraire toute modification de forme et toute variante de réalisation dans le cadre et l'esprit de l'invention, l'essentiel étant de prévoir un premier dépôt par enduction d'une surface complète d'un support avant de déposer des filets ou des dépôts partiels uniquement en surface centrale de ce support, de manière à permettre l'assemblage d'un produit céramique ou d'un produit obtenu par cuisson susceptible de présenter une concavité centrale, des pores, des interstices ou des imperfections résultant de la cuisson.

## Revendications

1. Procédé de fabrication de produit de revêtement de sol, mur ou autre surface de bâtiment, comportant les étapes suivantes :
a. déposer (105) une enduction sur toute la surface d'un support de base pour imperméabiliser cette surface,
b. déposer (106) uniquement en partie centrale dudit support de base des lignes ou des points d'agent adhésif,
avant d'appliquer sur le support de base un produit sensiblement plan et présentant des pores ou une concavité en partie centrale pour fabriquer le produit de revêtement de sol, mur ou autre surface de bâtiment.

2. Procédé selon la revendication 1, comportant des étapes initiales de climatisation (101) du support de base, de nettoyage (102) du support de base et de convoyage (104) du support de base.

3. Procédé selon la revendication 1 ou la revendication 2, comportant des étapes initiales de convoyage (202) du produit sensiblement plan, de dépoussiérage (204) du produit sensiblement plan et de réchauffage (205) du produit sensiblement plan.

4. Procédé selon l'une quelconque des revendications précédentes, comportant une étape (301) de mise en pression après assemblage (300) du produit de revêtement, à une pression de l'ordre de 100 bars.

5. Procédé selon l'une quelconque des revendications précédentes, comportant une étape (302) de calandrage du produit de revêtement.

6. Dispositif de fabrication de produit de revêtement de sol, mur ou autre surface de bâtiment, comportant :
a. des moyens (15) pour déposer une enduction sur toute la surface d'un support de base pour imperméabiliser cette surface.
b. des moyens (16) pour déposer uniquement en partie centrale dudit support de base des lignes ou des points d'agent adhésif,
avant d'appliquer sur le support de base un produit sensiblement plan et présentant des pores ou une concavité en partie centrale pour fabriquer le produit de revêtement de sol, mur ou autre surface de bâtiment.

7. Dispositif selon la revendication 6, comportant des moyens (11) de climatisation du support de base, des moyens (12) de nettoyage du support de base et des moyens (14) de convoyage du support de base.

8. Dispositif selon la revendication 6 ou la revendication 7, comportant des moyens (22) de convoyage du produit sensiblement plan, des moyens (24) de dépoussiérage du produit sensiblement plan et des moyens (25) de réchauffage du produit sensiblement plan.

9. Dispositif selon l'une quelconque des revendications 6 à 8, comportant des moyens (31) de mise en pression à une pression de l'ordre de 100 bars et des moyens (30) d'assemblage du produit de revêtement.

10. Dispositif selon l'une quelconque des revendications 6 à 9, comportant des moyens (32) de calandrage du produit de revêtement.

11. Produit de revêtement obtenu pour mise en oeuvre d'un procédé de fabrication selon l'une quelconque des revendications 1 à 5.
